# DEMANDE DE BREVET EUROPEEN

(11) **EP 4 765 616 A1**
(43) Date de publication de la demande: **24.06.2026**
(21) Numéro de dépôt: 25223075.0
(22) Date de dépôt: 12.12.2025
(51) Int. Cl.: H02M 7/02

(54) **MODULE D'ALIMENTATION ÉLECTRIQUE EXTERNE AMÉLIORÉ D'AERONEF**

(30) Priorité: 20.12.2024 FR 2414881
(71) Demandeur: AIRBUS OPERATIONS (S.A.S.), 31060 Toulouse (FR)
(72) Inventeur: KAHALERRAS, Mohamed Khaled, 31060 Toulouse Cedex 9 (FR); ALBERO, Franck, 31060 Toulouse Cedex 9 (FR); DASTE, Pierre, 31060 Toulouse Cedex 9 (FR)
(74) Mandataire: Airbus-OPS SAS

(57) **Abrégé**

L'invention concerne un module d'alimentation électrique (APSM) pour aéronef (AC), comprenant une connexion électrique à un premier réseau de distribution de courant alternatif (GPUI), une connexion à un deuxième réseau de courant alternatif (GPU2), un module de synchronisation et de jonction (ACSM) et un convertisseur de puissance (C1), le module d'alimentation électrique (APSM) étant externe à l'aéronef (AC). Le convertisseur de puissance (C1) est configuré pour délivrer à l'aéronef (AC) une tension d'alimentation à courant continu (HVDCN1) obtenue par le module de synchronisation et de jonction (ACSM) à partir des premier et deuxième réseaux de distribution de courant alternatif (GPU1, CPU2).. Avantageusement, il est ainsi possible d'alimenter en énergie électrique un avion stationné sur une aire aéroportuaire, sans requérir de logistique complexe et sans avoir à utiliser son groupe auxiliaire de puissance.

## Description

### DOMAINE TECHNIQUE

La présente invention concerne un module d'alimentation électrique externe amélioré d'aéronef destiné à alimenter en énergie électrique un aéronef positionné sur une aire de stationnement d'une installation aéroportuaire.

### ÉTAT DE LA TECHNIQUE ANTÉRIEURE

Les architectures des aéronefs évoluent, notamment dans un but de réduction substantielle des émissions de gaz carboniques. Les architectures récentes ou à venir sont alors plus électrifiées et la densité d'énergie électrique nécessaire à bord des aéronefs est plus importante, au sol comme en vol. Lorsqu'un avion est stationné dans un aéroport, l'alimentation électrique qui lui est nécessaire lui est généralement fournie par son groupe auxiliaire de puissance (« APU » de l'anglais « Auxiliary Power Unit ») ou par une source d'alimentation électrique disponible au sol sous la forme d'un réseau d'alimentation électrique à courant alternatif à tension de 115V dont la puissance est limitée, par exemple depuis un groupe électrogène fixe ou mobile. Les besoins en puissance électrique sont maintenant accrus pour les aéronefs stationnés au sol et l'introduction de convertisseurs de puissance embarqués dans les aéronefs, ajustés en conséquence, serait préjudiciable au poids de l'aéronef. En outre, la mise à disposition de nouvelles sources d'énergie électrique dans les installations aéroportuaires, dimensionnées en conséquence, conduirait à la nécessité d'une logistique plus complexe avec un impact financier important.

La situation peut être améliorée.

### EXPOSÉ DE L'INVENTION

Un objet de la présente invention est de concilier au mieux les besoins environnementaux de réduction de gaz carboniques et les besoins en énergie électrique des aéronefs stationnés au sol, tout en évitant d'embarquer dans les aéronefs un poids supplémentaire pour ce faire, et en évitant une logistique au sol complexe et coûteuse.

A cet effet, il est proposé un module d'alimentation électrique pour l'alimentation électrique d'un aéronef comprenant au moins une première entrée configurée pour opérer une connexion électrique à un premier réseau de distribution de courant alternatif et un convertisseur de puissance, le module d'alimentation électrique étant externe à un aéronef, et le module d'alimentation étant tel que le convertisseur de puissance est configuré pour délivrer à l'aéronef une tension d'alimentation à courant continu, à partir d'au moins le premier réseau de distribution de courant alternatif relié à la première entrée, via une première sortie configurée pour une connexion à l'aéronef.

Le module d'alimentation électrique d'aéronef comprend au moins la première entrée connectée audit premier réseau de distribution de courant alternatif, une deuxième entrée configurée pour opérer une connexion à un deuxième réseau de distribution de courant alternatif, ainsi qu'un module interne de synchronisation et de jonction de deux lignes d'alimentation électrique à courant alternatif respectivement connectées auxdites première et deuxième entrées et dont une sortie de synchronisation est connectée à une entrée du convertisseur de puissance configuré pour délivrer, via ladite première sortie, ladite tension d'alimentation à courant continu à partir desdites deux lignes d'alimentation électrique synchronisées et jointes.

Selon un mode de réalisation, le module d'alimentation électrique d'aéronef est configuré pour être connecté à une pluralité de sources électriques 115V à courant alternatif fixes ou mobiles. Ces sources électriques sont celles communément trouvées dans les infrastructures aéroportuaires (liste non exhaustive) : prises 115VAC accessibles au sol, groupes électrogènes, groupes de batteries mobiles, etc.

Avantageusement, le module d'alimentation électrique est agencé dans une unité monobloc mobile.

Selon un mode de réalisation, le module d'alimentation est agencé sur ou dans un véhicule terrestre motorisé.

Selon un mode de réalisation, le module d'alimentation électrique d'aéronef est tel que sa ou ses entrées sont configurées chacune pour une connexion à un réseau présentant une tension alternative de 115V et opérant à une fréquence de 400Hz, et sa sortie est configurée pour délivrer une tension continue comprise entre 270V et 1000V, préférentiellement égale à 540V ou 800V.

Selon un mode de réalisation, la sortie du module d'alimentation est configurée pour délivrer une tension continue ajustable via une interface utilisateur de contrôle du module d'alimentation électrique d'aéronef.

### BRÈVE DESCRIPTION DES DESSINS

[Fig. 1] illustre schématiquement un module d'alimentation électrique pour aéronef selon un mode de réalisation ;
[Fig. 2] illustre schématiquement des détails d'implémentation du module d'alimentation déjà représenté sur la Fig. 1 selon une première variante de réalisation ;
[Fig. 3] illustre schématiquement des détails d'implémentation du module d'alimentation déjà représenté sur la Fig. 1 selon une deuxième variante de réalisation ; et,
[Fig. 4] illustre un exemple d'architecture d'un contrôleur interne d'un module d'alimentation selon un mode de réalisation.

### EXPOSÉ DÉTAILLÉ DE MODES DE RÉALISATION

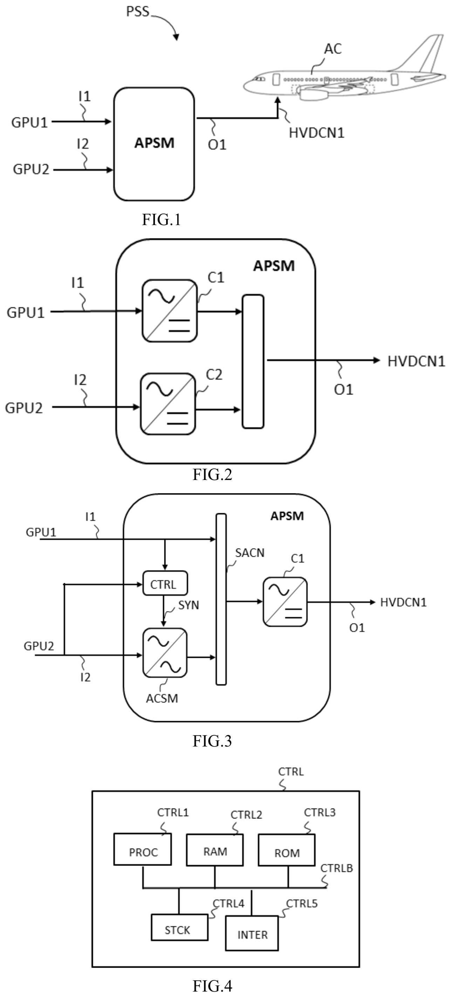

La Fig. 1 représente schématiquement un système PSS d'alimentation électrique d'un aéronef AC selon un mode de réalisation. Le système PSS est un système d'alimentation électrique d'un aéronef AC dans le sens où il est prévu pour alimenter l'aéronef AC en énergie électrique. Selon l'exemple décrit, le système PSS comprend un module d'alimentation électrique APSM ainsi que des éléments de raccordement à des sources en énergie électrique qui constituent des entrées I1 et I2, encore appelées ici interfaces d'entrée I1 et I2. Les entrées I1 et I2 sont chacune configurées pour une connexion à un réseau d'alimentation électrique à courant alternatif. Selon l'exemple non limitatif décrit, l'entrée I1 est configurée pour être connectée à un premier réseau d'alimentation électrique à courant alternatif GPU1 et l'entrée I2 est configurée pour être connectée à un deuxième réseau d'alimentation électrique à courant alternatif GPU2. Selon un mode de réalisation, les réseaux d'alimentation électrique GPU1 et GPU2 délivrent des tensions alternatives efficaces de 115V à une fréquence de 400Hz. Selon un exemple, ces réseaux sont fournis par des groupes électrogènes mobiles disposés sur une aire de stationnement de l'aéronef AC. Astucieusement, le module d'alimentation électrique APSM est configuré pour délivrer, sur une sortie O1, une tension continue, encore appelée ici réseau à courant continu HVDCN1, comprise entre 270V et 1000V, préférentiellement égale à 540V ou 800V, à partir de l'énergie électrique fournie par les réseaux GPU1 et GPU2.

Selon une première variante de réalisation, préférentielle, et illustrée sur la Fig. 2, le module d'alimentation électrique APSM comprend un premier module convertisseur de puissance C1, relié à l'entrée Il et configuré pour opérer un redressement et une élévation de tension internes au module APSM ainsi qu'un deuxième module convertisseur de puissance C2, relié à l'entrée I2 et configuré pour opérer un redressement et une élévation de tension internes au module APSM. Les sorties des modules convertisseurs de puissance C1 et C2 sont mises en parallèles en s'assurant qu'elles soient régulées au même niveau de tension, et jointes pour délivrer l'énergie électrique qui en résulte sous la forme du réseau HVDCN1, de type HVDC (de l'anglais « High Voltage Direct Current ») sur la sortie O1, de sorte à pouvoir alimenter l'aéronef AC ou un autre aéronef connecté à la sortie O1. La mise en parallèle des sources converties en une alimentation à courant continu est faite en s'assurant que les amplitudes des tension de sources continues sont égales. Les circuits internes des convertisseurs de puissance C1 et C2 ne sont pas détaillés ici dans la mesure où cela n'est pas utile à la compréhension de l'invention. L'homme du métier saura déterminer un circuit de redressement de tension et un circuit élévateur de tension calibrés pour répondre aux besoins spécifiques, par exemple en tension ou en puissance, qui sont propres à un aéronef donné ou à une gamme d'aéronefs donnée.

La Fig. 3 illustre une autre variante de réalisation du module APSM, selon laquelle les réseaux à courants alternatifs GPU1 et GPU2 sont d'abord synchronisés en entrée du module d'alimentation électrique APSM, au moyen d'un circuit de synchronisation et de jonction. Le circuit de synchronisation et de jonction comporte un circuit ou module de synchronisation ACSM, sous contrôle d'un contrôleur interne CTRL, ainsi qu'un circuit de jonction au niveau d'une sortie SACN. Le contrôleur interne CTRL est relié aux entrées I1 et I2 et pilote alors un signal de synchronisation SYN pour commander le circuit ou module de synchronisation ACSM. Le contrôleur interne CTRL s'assure que les sources à courant alternatif sont bien régulées au même niveau de tension 115VAC, à la même fréquence 400 Hz, et avec le même ordre de phases (par exemple PhA, PhB, PhC). Au niveau de la sortie SACN, la sortie du circuit ou module de synchronisation ACSM qui prend en entrée l'entrée I2 connectée au réseau GPU2 est alors synchronisée avec le réseau GPU1 appliqué à l'entrée I1. Grâce à cette synchronisation, l'entrée I2 ainsi ajustée peut être jointe à l'entrée I1. La synchronisation et la mise en parallèle des sources à courant alternatif est faite en s'assurant que toutes les sources opèrent avec le même ordre des phases (par exemple une phase A, puis une phase B puis une phase C), à la même fréquence, par exemple 400 Hz, et avec la même amplitude, par exemple 115VAC. Ces deux dernières conditions seront faciles à mettre en place du fait que toutes les sources électriques aéroportuaires répondent à un même standard 115VAC à 400 Hz. La sortie de synchronisation est connectée à une entrée du convertisseur de puissance dit redresseur, qui permet de convertir et réguler la tension alternative en une tension continue. Le convertisseur est configuré pour délivrer, via la sortie O1, ladite tension d'alimentation à courant continu à partir desdites deux lignes d'alimentation électrique synchronisées et jointes.

Par exemple, pour effectuer la synchronisation, le contrôleur interne CTRL est configuré pour mesurer les tensions, fréquences et phases des réseaux GPU1 et GPU2. Ensuite, en fonction de la différence de fréquence entre les réseaux GPU1 et GPU2, de la différence de phase entre les réseaux GPU1 et GPU2, et de la différence de tension entre les réseaux GPU1, GPU2, le contrôleur interne CTRL instruit le module de synchronisation ACSM d'ajuster le signal électrique fourni par l'entrée I2 de manière correspondante. Une boucle à verrouillage de phase PLL (« Phase Locked Loop » en anglais) peut être utilisée pour ce faire.

Il est aussi possible que les réseaux GPU1 et GPU2 soient fournis par des groupes électrogènes, et que le module APSM puisse agir sur un desdits groupes électrogènes pour aligner la tension, la fréquence et la phase d'un premier réseau parmi lesdits réseaux GPU1 et GPU2 par rapport à celles du second réseau parmi lesdits réseaux GPU1 et GPU2. Pour la fréquence et la phase, le module APSM augmente ou diminue le régime moteur du groupe électrogène associé au premier réseau selon l'ajustement nécessaire en correspondance avec la différence de mesures de fréquence et de phase effectuées entre lesdits réseaux GPU1 et GPU2. Et pour aligner la tension du premier réseau par rapport à celle du second réseau, le module de synchronisation ACSM ajuste l'excitation d'alternateur du premier réseau selon l'ajustement nécessaire en correspondance avec la différence de mesures de tension effectuées entre lesdits réseaux GPU1 et GPU2.

Selon un mode de réalisation, le contrôleur interne CTRL est également utilisé pour opérer des configurations internes du module ACSM, par exemple pour configurer le niveau de tension de sortie appliqué à la sortie O1. Selon cette deuxième variante de réalisation, la sortie synchronisée SACN est reliée à l'entrée du convertisseur de puissance C1 qui opère alors un redressement et une élévation de tension pour fournir la tension continue HVDCN1 sur la sortie O1. Les circuits internes du module de synchronisation ne sont pas décrits ici plus en détails dans la mesure où ils ne participent pas à la compréhension de l'invention. Là encore, l'homme du métier saura choisir un module de synchronisation de deux réseaux analogiques présentant des tensions variables de même amplitude, dans le but d'alimenter ensuite un circuit de redressement et d'élévation de tension pour répondre aux besoins spécifiques, par exemple en tension ou en puissance, pour un aéronef donné ou une famille d'aéronefs donnée.

Selon un mode de réalisation, la tension continue fournie sur la sortie O1 par le module d'alimentation électrique APSM est configurable par un utilisateur via une interface de contrôle directement accessible sur le module APSM ou accessible à distance. Selon un mode de réalisation, l'interface de contrôle est un clavier ou un commutateur à plusieurs positions implémenté directement sur le module APSM. Selon une variante, le module d'alimentation électrique peut être configuré via une interface de communication sans fil, par ondes radio, par exemple depuis un centre de contrôle d'une installation aéroportuaire.

Avantageusement, le module d'alimentation électrique APSM est monobloc et est configuré pour être porté sur ou dans un véhicule terrestre à moteur, ou sur une remorque pouvant être tractée ou poussée par un véhicule terrestre à moteur, ce qui le rend aisément mobile et permet de l'approcher au mieux d'un ou plusieurs groupes électrogènes, à proximité d'un aéronef.

Selon un mode de réalisation, le contrôleur interne CTRL est configuré pour détecter automatiquement la présence ou l'absence de chacun des réseaux électriques GPU1 et GPU2 en entrée du module d'alimentation électrique APSM de sorte à pouvoir opérer, même avec une puissance de sortie moindre, si un seul réseau seulement parmi les réseaux GPU1 et GPU2 est relié au module APSM.

La Fig. 4 illustre schématiquement un exemple d'architecture interne du dispositif de contrôle et de contrôle de synchronisation CTRL interne au module d'alimentation électrique APSM.

Selon l'exemple d'architecture matérielle représenté à la Fig. 4, le dispositif de contrôle CTRL interne au module d'alimentation électrique APSM comprend alors, reliés par un bus de communication CTRLB : un processeur ou CPU (« Central Processing Unit » en anglais) CTRL1 ; une mémoire vive RAM (« Random Access Memory » en anglais) CTRL2 ; une mémoire morte ROM (« Read Only Memory » en anglais) CTRL3 ; une unité de stockage telle qu'un disque dur (ou un lecteur de support de stockage, tel qu'un lecteur de cartes SD (« Secure Digital » en anglais) CTRL4 ; un module d'interfaces de puissance et de communication CTRL5 permettant au dispositif de contrôle CTRL interne au module d'alimentation électrique APSM de communiquer avec des dispositifs distants, tels des capteurs, des actionneurs ou des dispositifs distants, dont en particulier un ou plusieurs dispositifs d'aéronef.

Le processeur CTRL1 du dispositif avionique de contrôle de calage est capable d'exécuter des instructions chargées dans la RAM CTRL2 à partir de la ROM CTRL3, d'une mémoire externe (non représentée), d'un support de stockage (tel qu'une carte SD), ou d'un réseau de communication. Lorsque le dispositif de contrôle CTRL interne au module d'alimentation électrique APSM est mis sous tension, le processeur CTRL1 est capable de lire de la RAM CTRL2 des instructions et de les exécuter. Ces instructions forment un programme d'ordinateur causant la mise en œuvre, par le processeur CTRL1 du dispositif de contrôle CTRL interne au module d'alimentation électrique APSM, de tout ou partie d'un procédé de synchronisation des réseaux électriques appliqués aux entrées I1 et I2.

Tout ou partie d'un tel procédé de synchronisation peut alors être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de contrôle CTRL interne au module d'alimentation électrique APSM comprend de la circuiterie électronique configurée pour mettre en œuvre un procédé de contrôle de synchronisation de réseaux électriques de type alternatif. Bien évidemment, le dispositif de contrôle CTRL interne au module d'alimentation électrique APSM comprend en outre ou est couplé à tous les éléments usuellement présents dans un système électronique comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

L'invention ne se limite pas aux seuls exemples et modes de réalisation décrits mais plus généralement à tout module d'alimentation électrique d'aéronef comprenant une ou plusieurs entrées prévues pour être alimentées par des sources d'alimentation à courant alternatif et comprenant une circuiterie pour délivrer une source d'énergie électrique à courant continu de type HVDC apte à alimenter un aéronef stationné. En particulier, le module d'alimentation électrique peut comprendre plus de deux entrées configurées pour être connectées à un réseau d'alimentation à courant alternatif, par exemple 2, 3, 4 ou 5 entrées, voire plus encore.

## Revendications

1. Module d'alimentation électrique (APSM) pour l'alimentation électrique d'un aéronef (AC) comprenant au moins :
une première entrée (I1) configurée pour opérer une connexion électrique à un premier réseau de distribution de courant alternatif (GPU1) et
un convertisseur de puissance (C1),
le module d'alimentation électrique (APSM) étant externe à l'aéronef,
le convertisseur de puissance (C1) étant configuré pour délivrer audit aéronef (AC) une tension d'alimentation à courant continu (HVDCN1), à partir d'au moins ledit premier réseau de distribution de courant alternatif (GPU1), via une sortie (O1) configurée pour une connexion audit aéronef (AC),
**caractérisé en ce que** le module d'alimentation électrique (APSM) comprend une deuxième entrée (I2) configurée pour opérer une connexion à un deuxième réseau de distribution de courant alternatif (GPU2), ainsi qu'un circuit de synchronisation et de jonction de deux lignes d'alimentation électrique à courant alternatif respectivement connectées auxdites entrées (I1, I2) dont une sortie synchronisée (SACN) est connectée à une entrée dudit convertisseur de puissance (C1) configuré pour délivrer, via ladite sortie (O1), ladite tension d'alimentation à courant continu (HVDCN1) à partir desdites deux lignes d'alimentation électrique synchronisées et jointes.

2. Module d'alimentation électrique (APSM) d'aéronef (AC) selon la revendication 1, ledit module (APSM) étant configuré pour être connecté à une pluralité de groupes électrogènes fixes ou mobiles.

3. Module d'alimentation électrique (APSM) d'aéronef selon l'une des revendications 1 et 2, ledit module d'alimentation électrique (APSM) étant agencé dans une unité monobloc mobile.

4. Module d'alimentation électrique (APSM) d'aéronef selon l'une quelconque des revendications 1 à 3, ledit module d'alimentation étant agencé sur ou dans un véhicule terrestre motorisé.

5. Module d'alimentation électrique (APSM) d'aéronef selon l'une quelconque des revendications 1 à 4, dans lequel la (I1) ou les entrées (I1, I2) sont configurées pour une connexion à un réseau présentant une tension alternative de 115V et opérant à une fréquence de 400Hz, et ladite sortie (O1) étant configurée pour délivrer une tension continue comprise entre 500V et 1000V, préférentiellement égale à 540V ou 800V.

6. Module d'alimentation électrique (APSM) selon l'une quelconque des revendications 1 à 5, dans lequel ladite sortie (O1) est configurée pour délivrer une tension continue ajustable via une interface utilisateur de contrôle dudit module (APSM).
